# EUROPEAN PATENT APPLICATION

(11) **EP 4 082 856 A2**
(43) Date of publication of application: **02.11.2022**
(21) Application number: 22183894.9
(22) Date of filing: 08.07.2022
(51) Int. Cl.: B60W 30/18, B60W 40/09, B60W 50/00, B60W 60/00

(54) **E2E LEARNING-BASED EVALUATOR FOR AN AUTONOMOUS DRIVING VEHICLE**

(30) Priority: 01.09.2021 US 202117446644
(71) Applicant: Baidu USA LLC, Sunnyvale, California 94089 (US)
(72) Inventor: JIANG, Shu, Sunnyvale, 94089 (US); LIN, Weiman, Sunnyvale, 94089 (US); CAO, Yu, Sunnyvale, 94089 (US); WANG, Yu, Sunnyvale, 94089 (US); XU, Kecheng, Sunnyvale, 94089 (US); SUN, Hongyi, Sunnyvale, 94089 (US); TAO, Jiaming, Sunnyvale, 94089 (US); LUO, Qi, Sunnyvale, 94089 (US); HU, Jiangtao, Sunnyvale, 94089 (US); MIAO, Jinghao, Sunnyvale, 94089 (US)
(74) Representative: Isarpatent

(57) **Abstract**

A method of evaluating an autonomous driving module, a method of operating an autonomous driving vehicle, a non-transitory machine-readable medium, an electronic device, and a computer program product are provided. The method of evaluating an autonomous driving module includes receiving, at a simulation platform, a record file recorded by a manually-driving ADV on a road segment, the simulation platform including a first encoder, a second encoder, and a performance evaluator; simulating automatic driving operations of a dynamic model of the ADV on the road segment based on the record file, the dynamic model including an autonomous driving module to be evaluated. The method further includes: for each trajectory generated by the autonomous driving module during the simulation: extracting a corresponding trajectory associated with the manually-driving ADV from the record file, encoding the trajectory into a first semantic map and the corresponding trajectory into a second semantic map, and generating a similarity score based on the first semantic map and the second semantic map. The method also includes generating an overall performance score based on each similarity score.

## Description

### TECHNICAL FIELD

Embodiments of the present disclosure relate generally to operating autonomous vehicles. More particularly, embodiments of the disclosure relate to evaluating the performance of an autonomous driving vehicle in trajectory planning.

### BACKGROUND

Vehicles operating in an autonomous mode (e.g., driverless) can relieve occupants, especially the driver, from some driving-related responsibilities. When operating in an autonomous mode, the vehicle can navigate to various locations using onboard sensors, allowing the vehicle to travel with minimal human interaction or in some cases without any passengers.

An autonomous driving vehicle (ADV) needs to plan its trajectories before it can move. Thus, the trajectory planning function is critical to the reliability and safety of the ADV. The trajectory planning functions need to be thoroughly tested offline and evaluated before they are deployed in an ADV. Existing trajectory planning performance evaluators are ruled-based, and evaluate a planned trajectory based on dynamic parameters of the trajectory, such as its curvatures. If a curvature exceeds a certain threshold, the performance evaluator can determine that the planning functions have bad performance.

However, the selection of parameters for use in evaluating a trajectory and the selection of an appropriate threshold value for each parameter depend on experience, and thus are hard to be generalized.

### SUMMARY

According to an aspect of the present disclosure, there is provided a computer-implemented method of evaluating an autonomous driving module for deployment to an autonomous driving vehicle ADV, including: receiving a record file recorded by a manually-driving ADV on a road segment; simulating automatic driving operations of a dynamic model of the ADV on the road segment based on the record file, the dynamic model modeling the autonomous driving module. The method further includes: for each of a plurality of first trajectories generated by the autonomous driving module during the simulating of the automatic operations of the dynamic model, extracting a corresponding second trajectory associated with the manually-driving ADV from the record file; encoding, using a first semantic encoder, the first trajectory into a first semantic map; encoding, using a second semantic encoder, the corresponding second trajectory into a second semantic map; and generating, using a performance evaluator, a similarity score based on the first semantic map and the second semantic map. The method also includes: generating an overall performance score based on each similarity score, wherein the overall performance score is used to modify one or more parameters of the autonomous driving module to improve a performance of the autonomous driving module.

According to another aspect of the present disclosure, there is provided a non-transitory machine-readable medium having instructions stored therein, which when executed by a processor, cause the processor to perform the method mentioned above.

According to another aspect of the present disclosure, there is provided a computer-implemented method of operating an autonomous driving vehicle ADV, the method including: generating, by a performance evaluator in the ADV, a performance score for an autonomous driving module of the ADV based on operations of the ADV during a test run on a road segment; determining, by the ADV, that the performance score is below a threshold; identifying, by the performance evaluator, a type of a driving scenario that the ADV is about to enter on the road segment; determining, by the ADV, that a set of parameters corresponding to the type of the driving scenario exists for the autonomous driving module in a memory of the ADV; and replacing, by the ADV, a set of current parameters for the autonomous driving module with the set of parameters corresponding to the type of the driving scenario.

According to another aspect of the present disclosure, there is provided an electronic device including a processor configured to perform the methods mentioned above.

According to another aspect of the present disclosure, there is provided a computer program product including instructions which, when executed by a processor, cause the processer to perform the methods mentioned above.

### BRIEF DESCRIPTION OF THE DRAWINGS

Embodiments of the disclosure are illustrated by way of example and not limitation in the figures of the accompanying drawings in which like references indicate similar elements.
Figure 1 is a block diagram illustrating an autonomous driving network configuration according to an example of the disclosure.
Figure 2 is a block diagram illustrating an example of an autonomous vehicle according to an example of the disclosure.
Figures 3A-3B are block diagrams illustrating an example of a perception and planning system used with an autonomous vehicle according to an example of the disclosure.
Figure 4 illustrates an example of an autonomous driving simulation platform for some examples of the disclosure.
Figure 5 is a flow diagram illustrating a process of evaluating an autonomous driving module according to an example of the disclosure.
Figure 6 illustrates an example of a semantic map according to an example of the disclosure.
Figure 7 illustrates the use of the performance evaluator in an ADV according to an example of the disclosure.
Figure 8 further illustrates the parameters manager A according to an example of the disclosure.
Figure 9 is a flow diagram illustrating a process of evaluating an autonomous driving module for deployment to an ADV according to an example of the disclosure.
Figure 10 is a flow diagram illustrating a process of operating an ADV according to an example of the disclosure.

### DETAILED DESCRIPTION

Various examples and aspects of the disclosures will be described with reference to details discussed below, and the accompanying drawings will illustrate the various examples. The following description and drawings are illustrative of the disclosure and are not to be construed as limiting the disclosure. Numerous specific details are described to provide a thorough understanding of various examples of the present disclosure. However, in certain instances, well-known or conventional details are not described in order to provide a concise discussion of examples of the present disclosures.

Reference in the specification to "one example" or "an example" means that a particular feature, structure, or characteristic described in conjunction with the example can be included in at least one example of the disclosure. The appearances of the phrase "in one example" in various places in the specification do not necessarily all refer to the same example.

To address the challenges in evaluating the performance of a planning module described above, an end to end (E2E) learning-based performance evaluator is described in this disclosure. The performance evaluator is a trained neural network model that takes data generated by sensors mounted on an ADV as input, and generates a single performance score as output. The performance evaluator does not need any performance parameters, thus relieving users of the burden of figuring out what parameters to use in testing the performance of a planning module. The performance evaluator can also be used to test of the performance of a prediction module.

In one example, an exemplary method includes receiving, at a simulation platform, a record file recorded by a manually-driving ADV on a road segment, the simulation platform including a first encoder, a second encoder, and a performance evaluator; simulating automatic driving operations of a dynamic model of the ADV on the road segment based on the record file, the dynamic model including an autonomous driving module to be evaluated. The method further includes: for each trajectory generated by the autonomous driving module during the simulation: extracting a corresponding trajectory associated with the manually-driving ADV from the record file, encoding the trajectory into a first semantic map and the corresponding trajectory into a second semantic map, and generating a similarity score based on the first semantic map and the second semantic map. The method also includes generating an overall performance score based on each similarity score.

In one example, the overall performance score is a mathematical mean of similarity scores for the plurality of trajectories of the dynamic model of the ADV.

In one example, the performance evaluator is a neural network model trained based on data collected by the manually driving ADV on multiple road segments, and data collected by the dynamic model of the ADV on the multiple road segments in the autonomous driving simulation platform.

In one example, the first semantic map is an image representing the trajectory and a speed of the dynamic model of the ADV at each of a number of points on the trajectory. The second semantic map is an image representing the corresponding trajectory of the manually driving ADV, and a speed of the manually driving ADV at each of a number of points on the corresponding trajectory.

The examples described above are not exhaustive of all aspects of the present disclosure. It is contemplated that the disclosure includes all examples that can be practiced from all suitable combinations of the various examples summarized above, and also those disclosed below.

### Autonomous Driving Vehicle

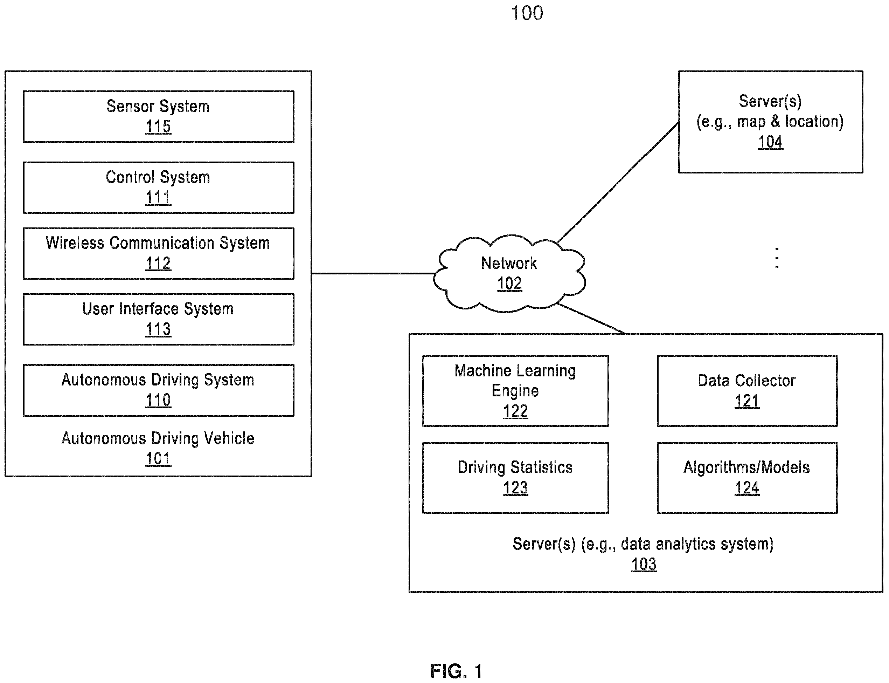

Figure 1 is a block diagram illustrating an autonomous driving network configuration according to one example of the disclosure. Referring to Figure 1, network configuration 100 includes autonomous driving vehicle (ADV) 101 that may be communicatively coupled to one or more servers 103-104 over a network 102. Although there is one ADV shown, multiple ADVs can be coupled to each other and/or coupled to servers 103-104 over network 102. Network 102 may be any type of networks such as a local area network (LAN), a wide area network (WAN) such as the Internet, a cellular network, a satellite network, or a combination thereof, wired or wireless. Server(s) 103-104 may be any kind of servers or a cluster of servers, such as Web or cloud servers, application servers, backend servers, or a combination thereof. Servers 103-104 may be data analytics servers, content servers, traffic information servers, map and point of interest (MPOI) servers, or location servers, etc.

An ADV refers to a vehicle that can be configured to in an autonomous mode in which the vehicle navigates through an environment with little or no input from a driver. Such an ADV can include a sensor system having one or more sensors that are configured to detect information about the environment in which the vehicle operates. The vehicle and its associated controller(s) use the detected information to navigate through the environment. ADV 101 can operate in a manual mode, a full autonomous mode, or a partial autonomous mode.

In one example, ADV 101 includes, but is not limited to, autonomous driving system (ADS) 110, vehicle control system 111, wireless communication system 112, user interface system 113, and sensor system 115. ADV 101 may further include certain common components included in ordinary vehicles, such as, an engine, wheels, steering wheel, transmission, etc., which may be controlled by vehicle control system 111 and/or ADS 110 using a variety of communication signals and/or commands, such as, for example, acceleration signals or commands, deceleration signals or commands, steering signals or commands, braking signals or commands, etc.

Components 110-115 may be communicatively coupled to each other via an interconnect, a bus, a network, or a combination thereof. For example, components 110-115 may be communicatively coupled to each other via a controller area network (CAN) bus. A CAN bus is a vehicle bus standard designed to allow microcontrollers and devices to communicate with each other in applications without a host computer. It is a message-based protocol, designed originally for multiplex electrical wiring within automobiles, but is also used in many other contexts.

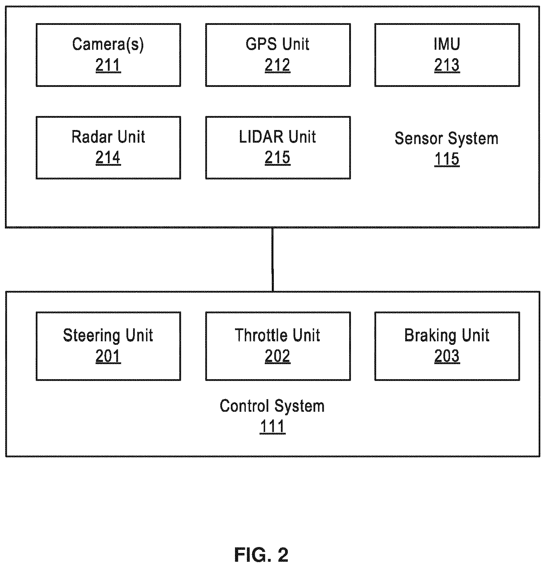

Referring now to Figure 2, in one example, sensor system 115 includes, but it is not limited to, one or more cameras 211, global positioning system (GPS) unit 212, inertial measurement unit (IMU) 213, radar unit 214, and a light detection and range (LIDAR) unit 215. GPS system 212 may include a transceiver operable to provide information regarding the position of the ADV. IMU unit 213 may sense position and orientation changes of the ADV based on inertial acceleration. Radar unit 214 may represent a system that utilizes radio signals to sense objects within the local environment of the ADV. In some examples, in addition to sensing objects, radar unit 214 may additionally sense the speed and/or heading of the objects. LIDAR unit 215 may sense objects in the environment in which the ADV is located using lasers. LIDAR unit 215 could include one or more laser sources, a laser scanner, and one or more detectors, among other system components. Cameras 211 may include one or more devices to capture images of the environment surrounding the ADV. Cameras 211 may be still cameras and/or video cameras. A camera may be mechanically movable, for example, by mounting the camera on a rotating and/or tilting a platform.

Sensor system 115 may further include other sensors, such as, a sonar sensor, an infrared sensor, a steering sensor, a throttle sensor, a braking sensor, and an audio sensor (e.g., microphone). An audio sensor may be configured to capture sound from the environment surrounding the ADV. A steering sensor may be configured to sense the steering angle of a steering wheel, wheels of the vehicle, or a combination thereof. A throttle sensor and a braking sensor sense the throttle position and braking position of the vehicle, respectively. In some situations, a throttle sensor and a braking sensor may be integrated as an integrated throttle/braking sensor.

In one example, vehicle control system 111 includes, but is not limited to, steering unit 201, throttle unit 202 (also referred to as an acceleration unit), and braking unit 203. Steering unit 201 is to adjust the direction or heading of the vehicle. Throttle unit 202 is to control the speed of the motor or engine that in turn controls the speed and acceleration of the vehicle. Braking unit 203 is to decelerate the vehicle by providing friction to slow the wheels or tires of the vehicle. Note that the components as shown in Figure 2 may be implemented in hardware, software, or a combination thereof.

Referring back to Figure 1, wireless communication system 112 is to allow communication between ADV 101 and external systems, such as devices, sensors, other vehicles, etc. For example, wireless communication system 112 can wirelessly communicate with one or more devices directly or via a communication network, such as servers 103-104 over network 102. Wireless communication system 112 can use any cellular communication network or a wireless local area network (WLAN), e.g., using WiFi to communicate with another component or system. Wireless communication system 112 could communicate directly with a device (e.g., a mobile device of a passenger, a display device, a speaker within vehicle 101), for example, using an infrared link, Bluetooth, etc. User interface system 113 may be part of peripheral devices implemented within vehicle 101 including, for example, a keyboard, a touch screen display device, a microphone, and a speaker, etc.

Some or all of the functions of ADV 101 may be controlled or managed by ADS 110, especially when operating in an autonomous driving mode. ADS 110 includes the necessary hardware (e.g., processor(s), memory, storage) and software (e.g., operating system, planning and routing programs) to receive information from sensor system 115, control system 111, wireless communication system 112, and/or user interface system 113, process the received information, plan a route or path from a starting point to a destination point, and then drive vehicle 101 based on the planning and control information. Alternatively, ADS 110 may be integrated with vehicle control system 111.

For example, a user as a passenger may specify a starting location and a destination of a trip, for example, via a user interface. ADS 110 obtains the trip related data. For example, ADS 110 may obtain location and route data from an MPOI server, which may be a part of servers 103-104. The location server provides location services and the MPOI server provides map services and the POIs of certain locations. Alternatively, such location and MPOI information may be cached locally in a persistent storage device of ADS 110.

While ADV 101 is moving along the route, ADS 110 may also obtain real-time traffic information from a traffic information system or server (TIS). Note that servers 103-104 may be operated by a third party entity. Alternatively, the functionalities of servers 103-104 may be integrated with ADS 110. Based on the real-time traffic information, MPOI information, and location information, as well as real-time local environment data detected or sensed by sensor system 115 (e.g., obstacles, objects, nearby vehicles), ADS 110 can plan an optimal route and drive vehicle 101, for example, via control system 111, according to the planned route to reach the specified destination safely and efficiently.

Server 103 may be a data analytics system to perform data analytics services for a variety of clients. In one example, data analytics system 103 includes data collector 121 and machine learning engine 122. Data collector 121 collects driving statistics 123 from a variety of vehicles, either ADVs or regular vehicles driven by human drivers. Driving statistics 123 include information indicating the driving commands (e.g., throttle, brake, steering commands) issued and responses of the vehicles (e.g., speeds, accelerations, decelerations, directions) captured by sensors of the vehicles at different points in time. Driving statistics 123 may further include information describing the driving environments at different points in time, such as, for example, routes (including starting and destination locations), MPOIs, road conditions, weather conditions, etc.

Based on driving statistics 123, machine learning engine 122 generates or trains a set of rules, algorithms, and/or predictive models 124 for a variety of purposes. Algorithms 124 can then be uploaded on ADVs to be utilized during autonomous driving in real-time.

Server 103 may also include an open space planner profiling tool 126 that can evaluate the performance of an open space planner in an ADV, and generate statistical performance metrics from a number of performance features extracted or calculated from record files of the ADV. The statistical performance metrics can be provided to a parameter tuning framework 128, which can use the statistical performance metrics to automatically and iteratively tune parameters of the open space planner.

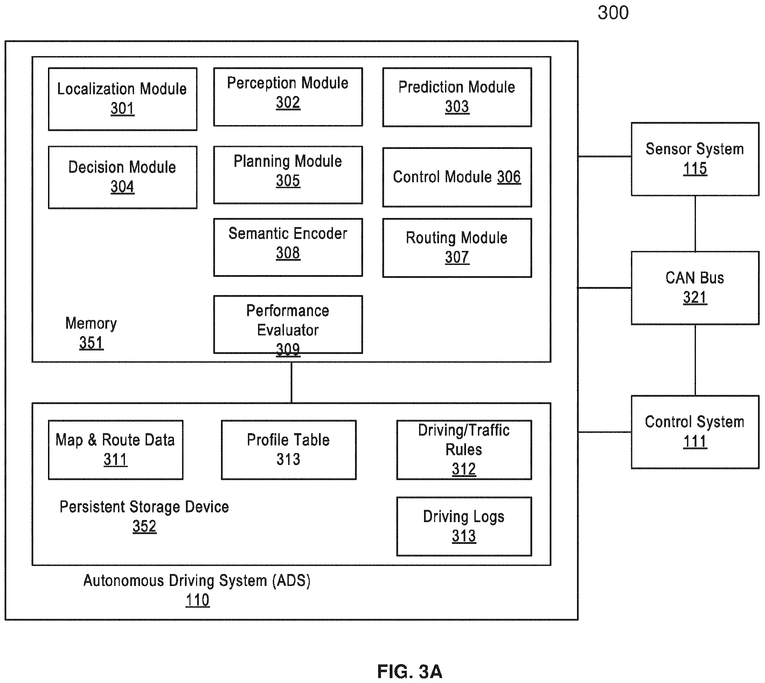

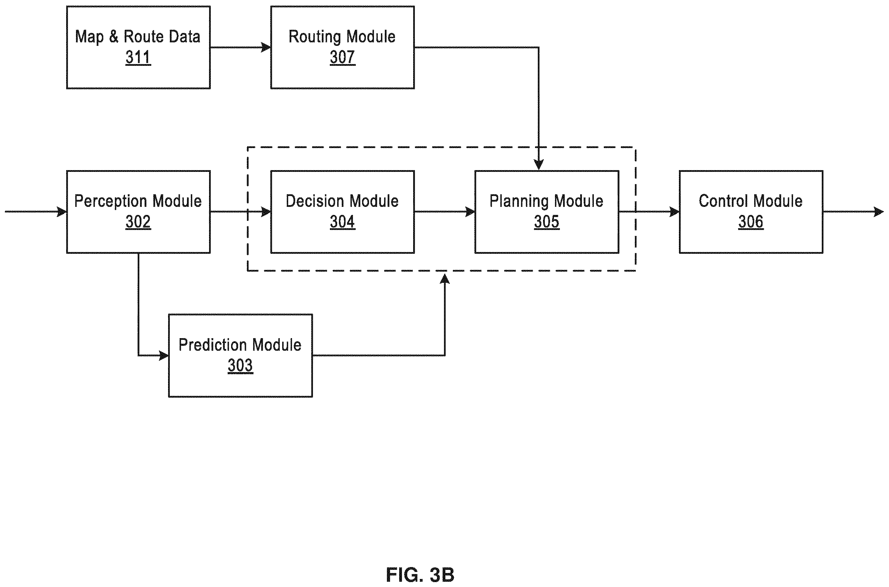

Figures 3A and 3B are block diagrams illustrating an example of an autonomous driving system used with an ADV according to one example. System 300 may be implemented as a part of ADV 101 of Figure 1 including, but is not limited to, ADS 110, control system 111, and sensor system 115. Referring to Figures 3A-3B, ADS 110 includes, but is not limited to, localization module 301, perception module 302, prediction module 303, decision module 304, planning module 305, control module 306, routing module 307, semantic encoder 308, and performance evaluator 309.

Some or all of modules 301-309 may be implemented in software, hardware, or a combination thereof. For example, these modules may be installed in persistent storage device 352, loaded into memory 351, and executed by one or more processors (not shown). Note that some or all of these modules may be communicatively coupled to or integrated with some or all modules of vehicle control system 111 of Figure 2. Some of modules 301-309 may be integrated together as an integrated module.

Localization module 301 determines a current location of ADV 300 (e.g., leveraging GPS unit 212) and manages any data related to a trip or route of a user. Localization module 301 (also referred to as a map and route module) manages any data related to a trip or route of a user. A user may log in and specify a starting location and a destination of a trip, for example, via a user interface. Localization module 301 communicates with other components of ADV 300, such as map and route data 311, to obtain the trip related data. For example, localization module 301 may obtain location and route data from a location server and a map and POI (MPOI) server. A location server provides location services and an MPOI server provides map services and the POIs of certain locations, which may be cached as part of map and route data 311. While ADV 300 is moving along the route, localization module 301 may also obtain real-time traffic information from a traffic information system or server.

Based on the sensor data provided by sensor system 115 and localization information obtained by localization module 301, a perception of the surrounding environment is determined by perception module 302. The perception information may represent what an ordinary driver would perceive surrounding a vehicle in which the driver is driving. The perception can include the lane configuration, traffic light signals, a relative position of another vehicle, a pedestrian, a building, crosswalk, or other traffic related signs (e.g., stop signs, yield signs), etc., for example, in a form of an object. The lane configuration includes information describing a lane or lanes, such as, for example, a shape of the lane (e.g., straight or curvature), a width of the lane, how many lanes in a road, one-way or two-way lane, merging or splitting lanes, exiting lane, etc.

Perception module 302 may include a computer vision system or functionalities of a computer vision system to process and analyze images captured by one or more cameras in order to identify objects and/or features in the environment of the ADV. The objects can include traffic signals, road way boundaries, other vehicles, pedestrians, and/or obstacles, etc. The computer vision system may use an object recognition algorithm, video tracking, and other computer vision techniques. In some examples, the computer vision system can map an environment, track objects, and estimate the speed of objects, etc. Perception module 302 can also detect objects based on other sensors data provided by other sensors such as a radar and/or LIDAR.

For each of the objects, prediction module 303 predicts what the object will behave under the circumstances. The prediction is performed based on the perception data perceiving the driving environment at the point in time in view of a set of map/rout information 311 and traffic rules 312. For example, if the object is a vehicle at an opposing direction and the current driving environment includes an intersection, prediction module 303 will predict whether the vehicle will likely move straight forward or make a turn. If the perception data indicates that the intersection has no traffic light, prediction module 303 may predict that the vehicle may have to fully stop prior to enter the intersection. If the perception data indicates that the vehicle is currently at a left-turn only lane or a right-turn only lane, prediction module 303 may predict that the vehicle will more likely make a left turn or right turn respectively.

For each of the objects, decision module 304 makes a decision regarding how to handle the object. For example, for a particular object (e.g., another vehicle in a crossing route) as well as its metadata describing the object (e.g., a speed, direction, turning angle), decision module 304 decides how to encounter the object (e.g., overtake, yield, stop, pass). Decision module 304 may make such decisions according to a set of rules such as traffic rules or driving rules 312, which may be stored in persistent storage device 352.

Routing module 307 is configured to provide one or more routes or paths from a starting point to a destination point. For a given trip from a start location to a destination location, for example, received from a user, routing module 307 obtains route and map information 311 and determines all possible routes or paths from the starting location to reach the destination location. Routing module 307 may generate a reference line in a form of a topographic map for each of the routes it determines from the starting location to reach the destination location. A reference line refers to an ideal route or path without any interference from others such as other vehicles, obstacles, or traffic condition. That is, if there is no other vehicle, pedestrians, or obstacles on the road, an ADV should exactly or closely follows the reference line. The topographic maps are then provided to decision module 304 and/or planning module 305. Decision module 304 and/or planning module 305 examine all of the possible routes to select and modify one of the most optimal routes in view of other data provided by other modules such as traffic conditions from localization module 301, driving environment perceived by perception module 302, and traffic condition predicted by prediction module 303. The actual path or route for controlling the ADV may be close to or different from the reference line provided by routing module 307 dependent upon the specific driving environment at the point in time.

Based on a decision for each of the objects perceived, planning module 305 plans a path or route or trajectory for the ADV, as well as driving parameters (e.g., distance, speed, and/or turning angle), using a reference line provided by routing module 307 as a basis. That is, for a given object, decision module 304 decides what to do with the object, while planning module 305 determines how to do it. For example, for a given object, decision module 304 may decide to pass the object, while planning module 305 may determine whether to pass on the left side or right side of the object. Planning and control data is generated by planning module 305 including information describing how vehicle 300 would move in a next moving cycle (e.g., next route/path segment). For example, the planning and control data may instruct vehicle 300 to move 10 meters at a speed of 30 miles per hour (mph), then change to a right lane at the speed of 25 mph.

Based on the planning and control data, control module 306 controls and drives the ADV, by sending proper commands or signals to vehicle control system 111 via a CAN bus module 321, according to a trajectory (also referred to as a route or path) defined by the planning and control data. The planning and control data include sufficient information to drive the vehicle from a first point to a second point of a route or path using appropriate vehicle settings or driving parameters (e.g., throttle, braking, steering commands) at different points in time along the path or route.

In one example, the planning phase is performed in a number of planning cycles, also referred to as driving cycles, such as, for example, in every time interval of 100 milliseconds (ms). For each of the planning cycles or driving cycles, one or more control commands will be issued based on the planning and control data. That is, for every 100 ms, planning module 305 plans a next route segment or path segment, for example, including a target position and the time required for the ADV to reach the target position. Alternatively, planning module 305 may further specify the specific speed, direction, and/or steering angle, etc. In one example, planning module 305 plans a route segment or path segment for the next predetermined period of time such as 5 seconds. For each planning cycle, planning module 305 plans a target position for the current cycle (e.g., next 5 seconds) based on a target position planned in a previous cycle. Control module 306 then generates one or more control commands (e.g., throttle, brake, steering control commands) based on the planning and control data of the current cycle.

Note that decision module 304 and planning module 305 may be integrated as an integrated module. Decision module 304/planning module 305 may include a navigation system or functionalities of a navigation system to determine a driving path for the ADV. For example, the navigation system may determine a series of speeds and directional headings to affect movement of the ADV along a path that substantially avoids perceived obstacles while generally advancing the ADV along a roadway-based path leading to an ultimate destination. The destination may be set according to user inputs via user interface system 113. The navigation system may update the driving path dynamically while the ADV is in operation. The navigation system can incorporate data from a GPS system and one or more maps so as to determine the driving path for the ADV 101.

Semantic Encoder 308 is a software application that encode a trajectory path into a semantic map. Performance evaluator 309 is a trained neural network that takes a semantic map encoding a planned trajectory of the ADV or a predicted trajectory of a moving object around the ADV, and generates a performance score indicating how similar the trajectory is to the ground truth.

### Performance Evaluator

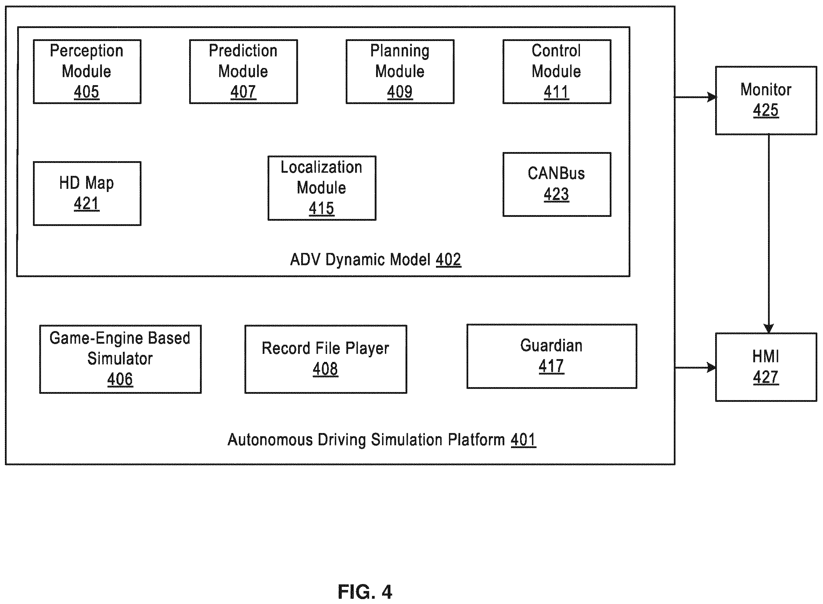

Figure 4 illustrates an example of an autonomous driving simulation platform for some examples of the disclosure.

The safety and reliability of an ADV are guaranteed by massive functional and performance tests, which are expensive and time consuming if these tests were conducted using physical vehicles on roads. A simulation platform 401 shown in this figure can be used to perform these tasks less costly and more efficiently.

In one example, the example simulation platform 401 includes a dynamic model 402 of an ADV, a game-engine based simulator 405, and a record file player 408. The game-engine based simulator 405 can provide a 3D virtual world where sensors can perceive and provide precise ground truth data for every piece of an environment. The record file player 408 can replay record files recorded in the real world for use in testing the functions and performance of various modules of the dynamic model 402.

In one example, the ADV dynamic model 402 can be a virtual vehicle that includes a number of core software modules, including a perception module 405, a prediction module 407, a planning module 409, a control module 411, a localization module 415, a CANBus module 423. These functions of these modules are described in detail in Figures 3A-3B.

As further shown, the simulation platform 401 can include a guardian module 417, which is a safety module that performs the function of an action center and intervenes when a monitor 425 detects a failure. When all modules work as expected, the guardian module 417 allows the flow of control to work normally. When a crash in one of the modules is detected by the monitor 425, the guardian module 427 can prevent control signals from reaching the CANBus 423 and can bring the ADV dynamic model 402 to a stop.

The simulation platform 401 can include a human machine interface (HMI) 427, which is a module for viewing the status of the dynamic model 402, and controlling the dynamic model 402 in real time.

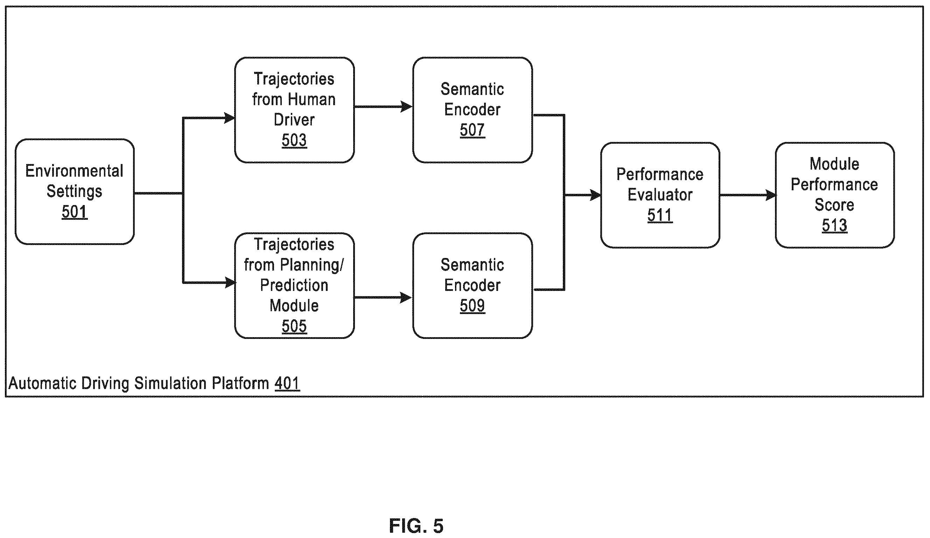

Figure 5 is a flow diagram illustrating a process of evaluating an autonomous driving module according to one example of the disclosure. More particularly, Figure 5 illustrates a process of evaluating a planning module and a prediction module. The same process can be used to evaluate both modules because the planning module can generate a trajectory for an ego ADV while the prediction module can generate a trajectory for a surrounding object.

As shown, before simulating operations of a dynamic model to test either a planning module or a prediction module, environment settings 501 need to be injected into the simulation platform 401. In one example, the simulation platform 401 can include a standard interface that allow a record file - which was recorded by an ADV that is manually driving on a particular road segment - to be uploaded into the simulation platform 402.

In one example, a record file can include outputs of the autonomous driving modules (e.g., modules 301-309 described in Figures 3A-3B) for each frame during road tests. For example, the record file can include the environment settings 501 which represents the virtual environment in which the ADV dynamic model is to be tested. The virtual environment can include information for static scenes and dynamic scenes. The information for the static scenes can include a variety of stationary traffic signs, such as stop lines, traffic signs, etc. The information for the dynamic scenes can include dynamic traffic flows around the ADV, such as vehicles, pedestrians, traffic lights and so on. The record file can also include trajectories of the manually driving ADV and trajectories of each dynamic surrounding objects.

In one example, trajectories 503 of the manually driving ADV and trajectories of the dynamic objects around the ADV can be extracted and stored in a storage, e.g., a buffer. During the simulation, the planning module and the prediction module of the dynamic model can generate a planned trajectory for the dynamic model, and a predicted trajectory for each dynamic object around the dynamic model. The planned trajectories of the dynamic model and the predicted trajectories of the dynamic objects can be stored into a storage, e.g., a buffer.

As described above, a planned trajectory is generated per frame (e.g., per 100ms). The simulation platform 402 can align the planned trajectories of the dynamic model and the trajectories of the manually driving ADV based on the environment settings.

In one example, if the planning module in the dynamic model is to be evaluated, each trajectory of the manually driving ADV can be encoded into a semantic map by a semantic encoder 507, and simultaneously each planned trajectory of the planning module of the dynamic model can also be encoded into a semantic map.

The pair of semantic maps can be provided to a performance evaluator 511, which is a neural network model trained using trajectories of manually driving ADVs and trajectories of dynamic models of the ADVs.

The performance evaluator 511can compare the pair of semantic maps, and generate a score based on whether they are similar. The more similar they are, the higher the score, and vice versa.

The simulation platform 402 can calculate a total performance score 513 to measure the performance of the planning module on the virtual road segment. The total performance score 513 can be a mathematic mean of the scores for all the pairs of semantic maps processed by the performance evaluator 511.

Alternatively, the total performance score 513 can be a weighted means of the scores for all the pairs of semantic maps with the weight measuring the complexity of the surrounding environment in terms of static scenes and dynamic scenes for a frame. The more complex the surrounding environment, the heavier the weight.

A total performance score for the prediction module can be similarly calculated.

In one example, a threshold value can be set to determine whether the performance of the planning module or the prediction module can be deployed to a physical ADV for use.

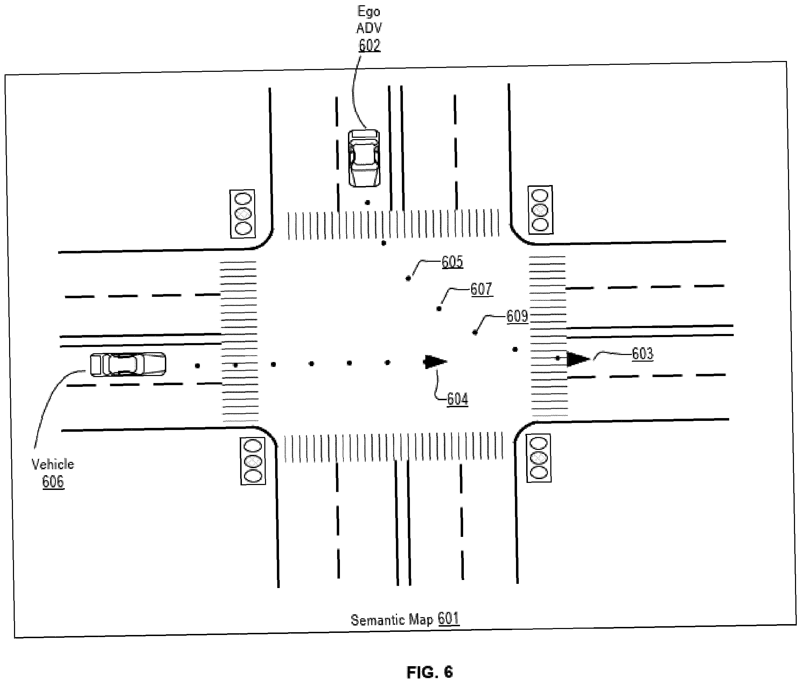

Figure 6 illustrates an example of a semantic map according to one example of the disclosure. More particularly, figure 6 illustrates a semantic map 601 of a planned trajectory of the dynamic model of the ADV during simulation. A semantic map of a trajectory of a manually driving ADV would be similar.

As shown in Figure 6, the semantic map 601 can be an image that encodes the dynamic and static environment as well as a trajectory of an ego vehicle 602 (i.e., the dynamic model in the simulation platform 401) and a trajectory of each dynamic object sounding the ego vehicle 602. In addition, the semantic map 601 encodes a speed of the ego vehicle 602 at each of a number of points 605, 607, and 609 on a planned trajectory 603.

In one example, different hues of blue or another color can be used to represent the different speeds.

As shown in Figure 6, the semantic map 601 also shows a surrounding environment of the ego vehicle 602, including several traffic lights, a surrounding vehicle 606, and its predicted trajectory 604.

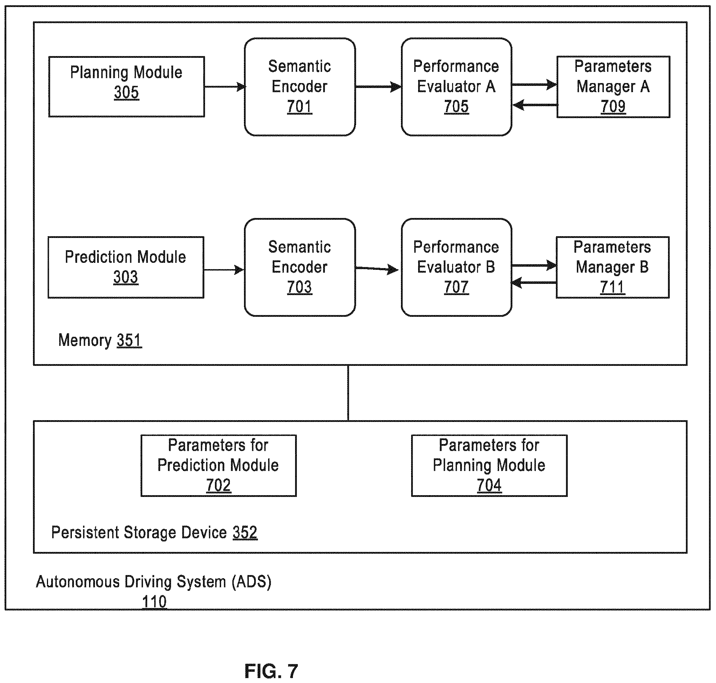

Figure 7 illustrates the use of the performance evaluator in an ADV according to one example of the disclosure.

As shown, a performance evaluator A 705 and a performance evaluator B 707 can be deployed in the ADS 110 hosted by the ADV 101 to evaluate the performance of the planning module 305 and the prediction module 303 in real time.

The performance evaluator A 705 can take semantic maps encoded by a semantic encoder 701 based on planned trajectories generated by the planning module 305 as input, and output a performance score. Similarly, the performance evaluator B 707 can take semantic maps encoded by a semantic encoder 703 based on predicted trajectories generated by the predicting module 303 as input, and output a performance score.

In this example, each of the performance evaluator A 705 and the performance evaluator B 707 is trained differently from the performance evaluator 511 described in Figure 5. While the performance evaluator 511 is trained using both trajectories generated by manually driving ADVs and trajectories generated by dynamic models of the ADVs, each of the performance evaluator A 705 and the performance evaluator B 707 is trained using only trajectories generated by manually driving ADVs.

Thus, since each of the performance evaluator A 705 and the performance evaluator B 707 has seen a large number of trajectories generated by manually driving ADVs during training, it can generate a performance score measuring the similarity between a planned trajectory and a trajectory of a manually driving ADV with only the planned trajectory as input.

In one example, the ADV 101 (i.e., the ADV that hosts the ADS 110) can use the existing parameters on the planning module 305 and the prediction module 303 for a test run after the ADV gets on a road segment. The test run can last for a predetermined period of time (e.g., the first 5 minutes after the ADV gets on the road segment), or last until the ADV 101 drives through one of a number of predetermined driving scenarios. Examples of the predetermined driving scenarios can include driving through traffic lights and passing a vehicle.

If the performance score of either the planning module 305 or the prediction module 303 during the test run is below a preset threshold, which means that the existing parameters of the module cannot yield a satisfactory performance. Thus, a corresponding parameter manager 709 or 711 can be triggered to reset the parameters of the module.

Examples of parameters of either the planning module 305 or the prediction module 303 include a weight of optimization, whether to penalize excessive acceleration, and a penalty to a sudden change of acceleration. A planned trajectory by the planning module 305 needs to meet multiple objectives. For example, a planned trajectory needs to be smooth, but also needs to enable the ADV 101 to arrive at a destination point as soon as possible. A proper balance needs to be struck among the objectives, which can conflict each other. The parameters of the planning module 305 is to ensure such a proper balance.

As further shown in Figure 7, the storage device 352 may store multiple sets of parameters for the planning module 704, and multiple sets of parameters of the prediction module 702. In one example, each set of the parameters 702 and each set of the parameters 704 can be ideal for a particular type of driving scenarios.

After the test run, the parameters manager A 709 determines whether to change the existing parameters of the planning module 305 based on the performance score generated by the performance evaluator A 705 during the test run. Similarly, the parameters manager B 711 can decide whether to change the existing parameters of the prediction module 303 based on the performance score generated by the performance evaluator B 707 during the test run.

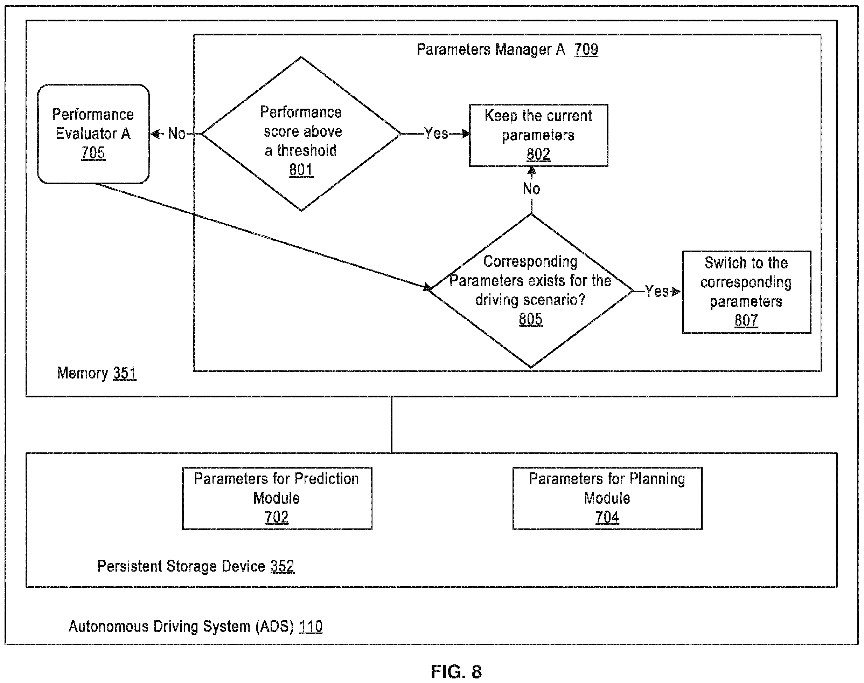

Figure 8 further illustrates the parameters manager A according to one example of the disclosure.

As shown in Figure 8, the parameters manager A 709 can first determine whether the performance score generated during the test run meets a threshold at block 801. If it does, the parameters manager A 709 can keep the current parameters for the planning module 305. Otherwise, the parameters manager A 709 can send a signal to the performance evaluator A 705, instructing it to determine a type of a driving scenario that the ADV 101 is about to enter.

After receiving the type of the driving scenario from the performance evaluator A 705, the parameters manager A 709 can determine whether a set of parameters corresponding to the type of driving scenario exists for the planning module 305 at block 805. If a set of such parameters exist in the storage 352 or the memory 351, the parameters manager A 709 can replace the current parameters of the planning module 305 with the set of corresponding parameters at block 807. Otherwise, the parameters manager A 709 can keep the current parameters of the planning module 305 at block 802.

If the performance score during the test run meets the threshold, the current parameters of the planning module would be kept without sending the signal to the performance evaluator A 705.

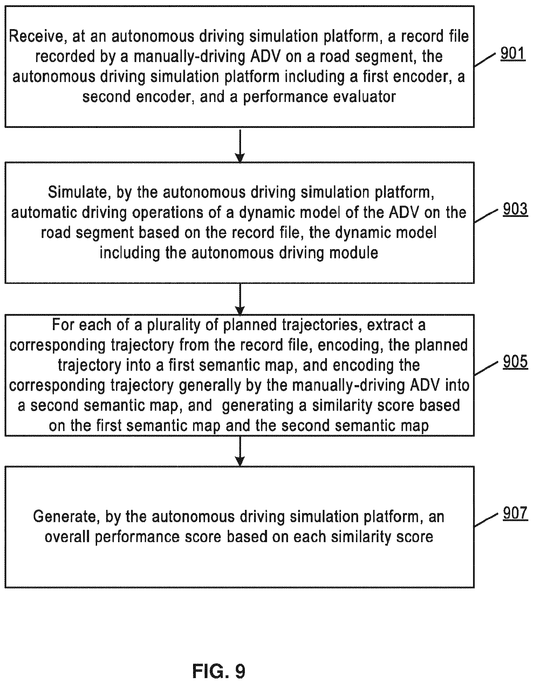

Figure 9 is a flow diagram illustrating a process of evaluating an autonomous driving module for deployment to an ADV according to one example of the disclosure. The process may be performed by a processing logic which may include software, hardware, or a combination thereof. For example, the process may be performed by the autonomous driving simulation platform in Figure 4, and the various software components described in Figure 5.

As shown in Figure 9, in operation 901, the processing logic at the autonomous driving simulation platform receives a record file recorded by a manually-driving ADV on a road segment. The autonomous driving simulation platform including a first encoder, a second encoder, and a performance evaluator. The record file includes static scenes and dynamic scenes of the road segment as well as actual trajectories of the mannually driving ADV and actual trajectories of dynamic objects around the manually driving ADV.

In operation 903, the processing logic simulates automatic driving operations of a dynamic model of the ADV on the road segment based on the record file, the dynamic model including the autonomous driving module. The processing logic can create, based on the record file a virtual version of the road segment, in which the dynamic model of the ADV can drive. The dynamic model can generate a planned trajectory per frame while driving in the simulation platform, and also generates a predicted trajectory for each moving objects around the dynamic model.

In operation 905, the processing logic can align actual trajectories of the manually driving ADV with planned trajectories of the dynamic model, and align actual trajectories of surrounding objects of the manually driving ADV with predicted trajectories of the surrounding objects in the simulation platform. For each actual trajectory, or each predicted trajectory, the processing logic extracts a corresponding trajectory associated with the manually-driving ADV from the record file, encodes the trajectory into a first semantic map, and the corresponding trajectory into a second semantic map, and generates a similarity score based on the first semantic map and the second semantic map.

In operation 907, the processing logic generates an overall performance score based on each similarity score. The overall performance score can be a mathematic mean or a weighted mean of the similarity scores.

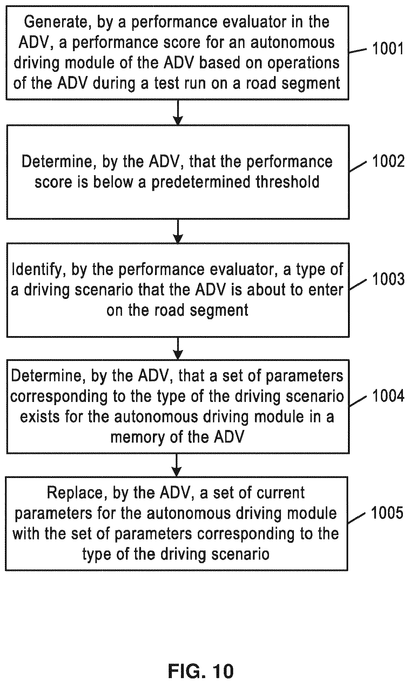

Figure 10 is a flow diagram illustrating a process of operating an autonomous driving vehicle (ADV) according to one example of the disclosure. The process may be performed by a processing logic which may include software, hardware, or a combination thereof. For example, the process may be performed by the various software components described in Figure 5.

As shown in Figure 10, in operation 1001, the processing logic generates a performance score for an autonomous driving module of the ADV based on operations of the ADV during a test run on a road segment. The test run last a preset period of time, in which sufficient data can be collected to perform an initial evaluation of the planning module or the prediction module of the ADV.

In operation 1002, the processing logic determines that the performance score is below a threshold. The performance score is generated by a neural network using planned trajectory generated during the test run as input.

In operation 1003, the processing logic identifies a type of a driving scenario that the ADV is about to enter on the road segment. The driving scenario is one of a number of driving scenarios that has been configured for the ADV. The ADV also has a set of parameters corresponding to each of the number of driving scenarios for each of the planning module and the prediction module.

In operation 1004, the processing logic determines that a set of parameters corresponding to the type of the driving scenario exists for the autonomous driving module in a memory of the ADV.

In operation 1005, the processing logic replaces a set of current parameters for the autonomous driving module with the set of parameters corresponding to the type of the driving scenario.

Note that some or all of the components as shown and described above may be implemented in software, hardware, or a combination thereof. For example, such components can be implemented as software installed and stored in a persistent storage device, which can be loaded and executed in a memory by a processor (not shown) to carry out the processes or operations described throughout this application. Alternatively, such components can be implemented as executable code programmed or embedded into dedicated hardware such as an integrated circuit (e.g., an application specific IC or ASIC), a digital signal processor (DSP), or a field programmable gate array (FPGA), which can be accessed via a corresponding driver and/or operating system from an application. Furthermore, such components can be implemented as specific hardware logic in a processor or processor core as part of an instruction set accessible by a software component via one or more specific instructions.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as those set forth in the claims below, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Examples of the disclosure also relate to an apparatus for performing the operations herein. Such a computer program is stored in a non-transitory computer readable medium. A machine-readable medium includes any mechanism for storing information in a form readable by a machine (e.g., a computer). For example, a machine-readable (e.g., computer-readable) medium includes a machine (e.g., a computer) readable storage medium (e.g., read only memory ("ROM"), random access memory ("RAM"), magnetic disk storage media, optical storage media, flash memory devices).

The processes or methods depicted in the preceding figures may be performed by processing logic that comprises hardware (e.g. circuitry, dedicated logic, etc.), software (e.g., embodied on a non-transitory computer readable medium), or a combination of both. Although the processes or methods are described above in terms of some sequential operations, it should be appreciated that some of the operations described may be performed in a different order. Moreover, some operations may be performed in parallel rather than sequentially.

Examples of the present disclosure are not described with reference to any particular programming language. It will be appreciated that a variety of programming languages may be used to implement the teachings of examples of the disclosure as described herein.

In the foregoing specification, examples of the disclosure have been described with reference to specific exemplary examples thereof. It will be evident that various modifications may be made thereto without departing from the broader spirit and scope of the disclosure as set forth in the following claims. The specification and drawings are, accordingly, to be regarded in an illustrative sense rather than a restrictive sense.

## Claims

1. A computer-implemented method of evaluating an autonomous driving module for deployment to an autonomous driving vehicle ADV, the method comprising:
Receiving (901) a record file recorded by a manually-driving ADV on a road segment;
Simulating (903) automatic driving operations of a dynamic model of the ADV on the road segment based on the record file, the dynamic model modeling the autonomous driving module;
for each of a plurality of first trajectories generated by the autonomous driving module
during the simulating of the automatic operations of the dynamic model,
extracting a corresponding second trajectory associated with the manually-driving ADV from the record file,
encoding, using a first semantic encoder, the first trajectory into a first semantic map,
encoding, using a second semantic encoder, the corresponding second trajectory into a second semantic map, and
generating, using a performance evaluator, a similarity score based on the first semantic map and the second semantic map; and
generating (907) an overall performance score based on each similarity score, wherein the overall performance score is used to modify one or more parameters of the autonomous driving module to improve a performance of the autonomous driving module.

2. The computer-implemented method of claim 1, wherein the autonomous driving module is a planning module or a prediction module of the dynamic model of the ADV.

3. The computer-implemented method of claim 2, wherein each of the plurality of first trajectories generated by the autonomous driving module is a planned trajectory generated by the planning module or a predicted trajectory generated by the prediction module.

4. The computer-implemented method of claim 2, wherein the corresponding second trajectory is an actual trajectory of the manually-driving ADV or an actual trajectory of a moving object around the ADV.

5. The computer-implemented method of claim 1, wherein the performance evaluator is a neural network model trained based on data collected by the manually-driving ADV on a plurality of road segments, and data collected by the dynamic model of the ADV on the plurality of road segments.

6. The computer-implemented method of claim 1, wherein the first semantic map is an image representing the first trajectory and a speed of the dynamic model of the ADV at each of a number of points on the first trajectory.

7. The computer-implemented method of claim 1, wherein the second semantic map is an image representing the corresponding second trajectory of the manually driving ADV, and a speed of the manually driving ADV at each of a number of points on the corresponding second trajectory.

8. The computer-implemented method of claim 1, wherein the overall performance score is a mathematical mean of similarity scores for the plurality of first trajectories of the dynamic model of the ADV.

9. A non-transitory machine-readable medium having instructions stored therein, which when executed by a processor, cause the processor to perform the method of any of claims 1-8.

10. A computer-implemented method of operating an autonomous driving vehicle ADV, the method comprising:
Generating (1001), by a performance evaluator in the ADV, a performance score for an autonomous driving module of the ADV based on operations of the ADV during a test run on a road segment;
Determining (1002), by the ADV, that the performance score is below a threshold;
Identifying (1003), by the performance evaluator, a type of a driving scenario that the ADV is about to enter on the road segment;
Determining (1004), by the ADV, that a set of parameters corresponding to the type of the driving scenario exists for the autonomous driving module in a memory of the ADV; and
Replacing (1005), by the ADV, a set of current parameters for the autonomous driving module with the set of parameters corresponding to the type of the driving scenario.

11. The computer-implemented method of claim 10, wherein the autonomous driving module is a planning module or a prediction module of the dynamic model of the ADV.

12. The computer-implemented method of claim 10, wherein the performance evaluator is a neural network model that is trained based on data collected by the ADV manually driving on the road segment.

13. The computer-implemented method of claim 12, wherein the trained neural network model takes semantic maps generated from trajectories of the autonomous driving module as input.

14. An electronic device comprising a processor configured to perform the method of any of claims 1-8 or the method of any of claims 10-13.

15. A computer program product comprising instructions which, when executed by a processor, cause the processer to perform the method of any of claims 1-8 or the method of any of claims 10-13.
